# EUROPÄISCHE PATENTANMELDUNG

(11) **EP 4 686 542 A1**
(43) Veröffentlichungstag der Anmeldung: **04.02.2026**
(21) Anmeldenummer: 25187147.1
(22) Anmeldetag: 03.07.2025
(51) Int. Cl.: B29B 7/28, B29B 7/18, B29B 7/74, B29B 7/72

(54) **VERFAHREN ZUM BETRIEB EINES MISCHERSYSTEMS BEI DER HERSTELLUNG EINER KAUTSCHUKMISCHUNG UND MISCHERSYSTEM FÜR DEN EINSATZ IN DEM VERFAHREN**

(30) Priorität: 02.08.2024 DE 102024207345
(71) Anmelder: Continental Reifen Deutschland GmbH, 30175 Hannover (DE)
(72) Erfinder: Rennmann, Tim, 30175 Hannover (DE); Cai, Xiaoke, 30175 Hannover (DE); Arend, Dominik, 30175 Hannover (DE)
(74) Vertreter: Continental Corporation

(57) **Zusammenfassung**

Die Erfindung betrifft ein Verfahren zum Betrieb eines Mischersystems (10) bei der Herstellung einer Kautschukmischung (12), wobei das Mischersystem (10) umfasst: i) ein Mischaggregat (14) mit einer Mischkammer (16), ii) eine elektronische Bilderfassungsvorrichtung (18), und iii) eine elektronische Datenverarbeitungsvorrichtung (20) mit einer Speichereinheit (22), umfassend die Verfahrensschritte: a) Eingeben von Bestandteilen der herzustellenden Kautschukmischung (12) in die Mischkammer (16), b) Betreiben des Mischaggregats (14) zum Mischen der eingegebenen Bestandteile, c) Erfassen zumindest einer Bildaufnahme des Inneren der Mischkammer (16) des Mischaggregats (14) und der darin gemischten Bestandeile mit der elektronischen Bilderfassungsvorrichtung (12), d) Auswerten der erfassten Bildaufnahmen des Inneren der Mischkammer (16) zum Bewerten des Mischzustandes der gemischten Bestandteile mit der elektronischen Datenverarbeitungsvorrichtung (20), wobei auf der Speichereinheit (22) ein auf maschinellem Lernen basierendes Bewertungsmodul gespeichert ist, wobei das Auswerten der erfassten Bildaufnahmen mit dem Bewertungsmodul anhand eines spezifischen Satzes von Trainingsdaten erfolgt.

## Beschreibung

Die Erfindung betrifft ein Verfahren zum Betrieb eines Mischersystems bei der Herstellung einer Kautschukmischung, ein auf dem Verfahren zum Betrieb eines Mischersystem aufbauendes Verfahren zum Herstellen eines Fahrzeugreifens, sowie ein Mischersystem für den Einsatz in dem entsprechenden Verfahren. Offenbart wird zudem ein Computerprogrammprodukt für den Einsatz in dem entsprechenden Verfahren.

Produkte aus Gummiwerkstoffen spielen in vielen Bereichen der Technik wegen ihrer vorteilhaften mechanischen Eigenschaften eine große Bedeutung. Die hierfür benötigten Gummiwerkstoffe werden regelmäßig aus vulkanisierbaren Kautschukmischungen hergestellt. Solche vulkanisierbaren Kautschukmischungen sind dabei heutzutage hochkomplexe Zusammensetzungen, welche neben den namensgebenden Dienkautschuken auch eine Vielzahl weiterer Bestandteile umfassen, insbesondere Füllstoffe, Weichmacher und andere Additive, welche neben dem für die Vulkanisation benötigten Vulkanisationssystem zugesetzt werden, um die physikalischchemischen sowie mechanischen Eigenschaften des aus der vulkanisierbaren Kautschukmischung herstellbaren Gummiwerkstoffes an die jeweiligen Anwendungserfordernisse abzustimmen.

Um aus entsprechenden vulkanisierbaren Kautschukmischungen hochleistungsfähige Gummiprodukte erhalten zu können, welche den regelmäßig hohen Anforderungen genügen können, welche an solche Produkte im Einsatz gestellt werden, beispielsweise an Fahrzeugreifen, ist es essentiell, dass die Bestandteile der vulkanisierbaren Kautschukmischung innig miteinander vermischt werden, sodass eine homogene Mischung erhalten wird.

Die Mischung vulkanisierbarer Kautschukmischungen erfolgt heutzutage zumeist in leistungsfähigen Mischaggregaten, wobei insbesondere der Einsatz sogenannter "Tandemmischer" mit großen Vorteilen verbunden ist. Moderne Mischaggregate erlauben in vorteilhafter Weise eine effiziente Mischung mit hohen Scherraten und/oder bei hohen Temperaturen.

Trotz der zunehmenden Leistungsfähigkeit der eingesetzten Mischaggregate wird die Herstellung qualitativ hochwertiger vulkanisierbarer Kautschukmischungen auch heute noch als sehr anspruchsvolle Aufgabe angesehen. Die Verfahrensparameter des Mischvorgangs, insbesondere die Mischtemperatur und die Dauer der Mischung, müssen präzise gesteuert werden, um für die vulkanisierbare Kautschukmischung den optimalen Mischzustand zu erreichen. Hierbei wird es als besonders herausfordernd empfunden, dass die Mischparameter, welche zum optimalen Mischzustand führen, sich auch bei der Verarbeitung der gleichen Materialien in dem gleichen Mischaggregat in vielen Fällen zwischen verschiedenen Durchläufen unterscheiden können, insbesondere wegen der nach Zugabe der Bestandteile der Kautschukmischung bestehenden Unterschiede in der Ausgangsverteilung der Materialien sowie der schweren Vorhersagbarkeit bzw. Reproduzierbarkeit des immer gleichen Mischprozesses.

Die vorstehenden Punkte führen dazu, dass die Herstellung vulkanisierbarer Kautschukmischungen bis heute sehr hohe Anforderungen an den Ausbildungsgrad und insbesondere auch die Erfahrung der im Verfahren eingesetzten Arbeitskräfte stellt. Die Identifikation des optimalen Mischzustandes erfolgt insbesondere bei Mischprozessen ohne hochentwickelte Verfahrensteuerung regelmäßig erfahrungsbasiert. Hierfür beobachten die im Verfahren eingesetzten Arbeitskräfte den Zustand der Mischung im Inneren des Mischaggregates, beispielsweise unmittelbar durch in Augenscheinnahme durch die Beschickungsöffnung des Mischaggregates oder durch Betrachtung von Bildaufnahmen und entscheiden auf Grundlage der visuellen Wahrnehmung und ihrer persönlichen Erfahrung, wann die entsprechende Kautschukmischung bereit für die Weiterverarbeitung ist. Ebenso obliegt es regelmäßig den im Verfahren eingesetzten Arbeitskräften, ggf. Maßnahmen einzuleiten, wenn die im Inneren der Mischkammer verarbeitete Mischung in einen Mischzustand gerät, der unerwünscht ist, beispielweise durch Zugabe weiterer Komponenten, durch Anpassung der Mischparameter oder sogar durch Veranlassung des Abbruchs der Mischung. Dies setzt regelmäßig voraus, dass die im Verfahren eingesetzten Arbeitskräfte zudem hochgradig aufmerksam und konzentriert den Mischzustand im Auge behalten, um zu verhindern, dass die Mischung unnötig lange gemischt wird, was insbesondere zu einer verschlechterten Zeit-, Kosten- und Energieeffizienz des gesamten Herstellungsverfahrens führen würde. Zudem müssen auch eine unzureichende Qualität durch ein zu kurzes Mischen oder durch das Mischen bei falschen Mischparametern verhindert werden, wobei letzteres insbesondere zu einer unzureichenden Qualität bei niedriger Effizienz führt.

Auch bei komplexeren Mischprozessen mit hochentwickelter Verfahrenssteuerung, welche spezialisierte Maschinenrezepte fahren, werden sehr hohe Anforderungen an die Maschinenrezeptgestaltung und insbesondere den Austausch zwischen den Maschinenbediener und Maschinenrezeptersteller. Da im Allgemeinen, jede Rezeptur ein individuelles Maschinenrezept benötigt, besteht eine besondere Herausforderung darin, ein ideales Rezept sicherzustellen, dass die notwendige Mischqualität mit guter Effizienz verbindet. Da selbst bei idealer Zusammenarbeit zwischen Maschinenbediener und Rezeptersteller immer nur nachträglich eventuelle Beobachtungen in eine Optimierung von Maschinenrezepten einfließen können, sind ineffiziente und/oder schwankende Mischergebnisse im Stand der Technik wahrscheinlich, woraus sich ebenfalls die vorstehenden Nachteile ergeben.

Die Abhängigkeit von menschlichen Entscheidungs- bzw. Abstimmungsprozessen und dem Erfahrungsschatz der im Verfahren eingesetzten Arbeitskräfte wird regelmäßig als ebenso nachteilig empfunden, wie die hohen Anforderungen an die Aufmerksamkeit der eingesetzten Arbeitskräfte, welche insbesondere bei Spät- und Nachtschichten sowie bei geringer Personalbelegung nur schwer zu gewährleisten sind. Im Stand der Technik sind Ansätze bekannt, die Überwachung von Mischprozessen möglichst weiter zu automatisieren bzw. die Überwachung durch die im Verfahren eingesetzten Arbeitskräfte zu erleichtern. Beispielsweise offenbart die EP 4215328 A1 ein Verfahren zur Herstellung einer Kautschukmischung, bei der die Oberflächentemperatur der Kautschukmischung im Mischaggregat überwacht wird, um die Temperaturhomogenität der Mischung zu bewerten. Allerdings ist die aus der EP 4215328 A1 bekannte Lösung nicht geeignet, den Mischzustand der gemischten Bestandteile zu bewerten. Dadurch ist es mit dem aus dem Stand der Technik bekannten Konzept nicht in effizienter Weise möglich, die bei Mischverfahren potenziell auftretenden Probleme hinsichtlich des Mischzustandes zu identifizieren, nämlich insbesondere eine mangelnde Inhomogenität der eingesetzten Materialien in der Mischung, sowie eine übermäßige Staubentwicklung, eine ungewollte Morphologie der Mischung, beispielsweise eine zu hohe Granularität, was ein nicht wirksames Mischen anzeigt.

Die primäre Aufgabe der vorliegenden Erfindung war es, die Nachteile des Standes der Technik auszuräumen oder zumindest zu verringern.

Insbesondere war es die Aufgabe der vorliegenden Erfindung, ein Verfahren zum Betrieb eines Mischersystems bei der Herstellung einer Kautschukmischung anzugeben, welches in zuverlässiger Weise die Herstellung von Kautschukmischungen in einem optimalen Mischzustand ermöglicht, insbesondere auch das individuell Optimum einzelner Mischungen.

Insoweit war es eine Aufgabe der vorliegenden Erfindung, dass das anzugebende Verfahren mit verringerten Anforderungen an den Ausbildungsgrad und die Erfahrung der im Verfahren eingesetzten Arbeitskräfte verbunden sein sollte.

Darüber hinaus war es wünschenswert, dass das anzugebende Verfahren möglichst weit automatisierbar sein sollte und insbesondere verringerte Anforderungen an den Aufmerksamkeitsgrad der im Verfahren eingesetzten Arbeitskräfte stellen sollte.

Zudem war es eine Aufgabe der vorliegenden Erfindung, dass das anzugebende Verfahren eine besonders zeit-, kosten- und energieeffiziente Herstellung von vulkanisierbaren Kautschukmischungen erlauben sollte, indem die hergestellten Kautschukmischungen beim Erreichen des optimalen Mischzustands möglichst frühzeitig ausgegeben und der Weiterverarbeitung zugeführt werden können sollten.

Es war eine wichtige Maßgabe der vorliegenden Erfindung, dass das anzugebende Verfahren hinsichtlich der Umweltverträglichkeit und der Arbeitssicherheit vorteilhaft sein sollte.

Insbesondere war es auch eine Aufgabe der vorliegenden Erfindung, dass das anzugebende Verfahren eine breite Palette an unzureichenden Mischungszuständen identifizieren können sollte, insbesondere neben einer fehlenden stofflichen Homogenität auch Fehlerzustände wie eine zu starke Staubentwicklung oder eine unerwünschte Granularität der gemischten Bestandteile.

Es war eine weitere Aufgabe der vorliegenden Erfindung, dass das anzugebende Verfahren möglichst niedrige Anforderungen an die apparativen Vorrichtungen stellen sollte, sodass eine Nachrüstung bestehender Anlagen möglichst leicht möglich sein sollte.

Insoweit war es eine Aufgabe der vorliegenden Erfindung, dass die zuverlässige Herstellung von Kautschukmischungen mit einer hohen Stabilität insbesondere auch für solche Kautschukmischungen erreicht werden sollte, welche gefälltes Siliziumdioxid, sogenanntes "Silika", sowie in vielen Fällen die zugehörigen Kupplungsreagenzien umfassen.

Es war eine weitere Aufgabe der vorliegenden Erfindung, dass das anzugebende Verfahren das allgemeine Qualitätsmanagement verbessern können sollte, wobei es insbesondere wünschenswert war, dass der Mischzustand für die hergestellten Kautschukmischungen in besonders effizienter Weise nachgehalten werden können sollte, um diesen nachträglich nachvollziehen zu können.

Die Erfinder der vorliegenden Erfindung haben nunmehr gefunden, dass sich die vorstehend beschriebenen Aufgaben lösen lassen, wenn in einem Mischersystem eine elektronische Bilderfassungsvorrichtung vorgesehen wird, welche zum Erfassen von Bildaufnahmen der Mischkammer des Mischaggregats eingerichtet ist, wenn während des Mischungsprozesses Bildaufnahmen des Inneren der Mischkammer aufgenommen werden und diese über eine elektronische Datenverarbeitungsvorrichtung mit einem auf maschinellem Lernen basierenden Bewertungsmodul ausgewertet werden, welches dazu trainiert ist, den Mischzustand der gemischten Bestandteile zu bewerten, wie es in den Ansprüchen offenbart ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Mischersysteme und Computerprogrammprodukte ergeben sich aus den Merkmalen bevorzugter Verfahren.

Insbesondere bevorzugte Ausführungsformen der Erfindung sind in den Ausführungsbeispielen offenbart. Besonders bevorzugte Ausführungsformen der Erfindung weisen entsprechend zwei oder mehr, bevorzugt drei oder mehr, ganz besonders bevorzugt vier oder mehr, der nachfolgend offenbarten bevorzugten Merkmale der Erfindung auf, welche auch in den Ausführungsbeispielen realisiert sind.

Die Erfindung betrifft ein Verfahren zum Betrieb eines Mischersystems bei der Herstellung einer Kautschukmischung, wobei das Mischersystem umfasst:
i) ein Mischaggregat mit einer Mischkammer zum Mischen von Bestandteilen einer herzustellenden Kautschukmischung,
ii) eine elektronische Bilderfassungsvorrichtung zum Erfassen von Bildaufnahmen der Mischkammer des Mischaggregats, und
iii) eine elektronische Datenverarbeitungsvorrichtung mit einer Speichereinheit,

umfassend die Verfahrensschritte:
   a) Eingeben von Bestandteilen der herzustellenden Kautschukmischung in die Mischkammer des Mischaggregats,
   b) Betreiben des Mischaggregats zum Mischen der eingegebenen Bestandteile,
   c) Erfassen zumindest einer Bildaufnahme des Inneren der Mischkammer des Mischaggregats und der darin gemischten Bestandeile mit der elektronischen Bilderfassungsvorrichtung,
   d) Auswerten der erfassten Bildaufnahmen des Inneren der Mischkammer zum Bewerten des Mischzustandes der gemischten Bestandteile mit der elektronischen Datenverarbeitungsvorrichtung,
wobei auf der Speichereinheit ein auf maschinellem Lernen basierendes Bewertungsmodul gespeichert ist, wobei das Auswerten der erfassten Bildaufnahmen mit dem Bewertungsmodul erfolgt, wobei die erfassten Bildaufnahmen als Eingabe in das Bewertungsmodul gegeben werden, um den Mischzustand der gemischten Bestandteile zu bewerten,
wobei das Bewertungsmodul dazu trainiert ist, aus Bildaufnahmen des Inneren der Mischkammer des Mischaggregats und den darin gemischten Bestandteilen einer herzustellenden Kautschukmischung den Mischzustand der gemischten Bestandteile zu bewerten, wobei das Training mit einem Satz von Trainingsdaten erfolgt, welcher eine Vielzahl von Trainingsbildaufnahmen des Inneren einer Mischkammer eines Trainingsmischaggregats und der darin gemischten Bestandteile einer herzustellenden Trainingskautschukmischung umfasst, für die der Mischzustand der gemischten Bestandteile bekannt ist.

Das erfindungsgemäße Verfahren dient dem Betrieb eines Mischersystems. Der Ausdruck "Mischersystem" bringt dabei zum Ausdruck, dass neben dem tatsächlichen Mischaggregat, in dem die Mischung der Bestandteile erfolgt, auch weitere Systembestandteile vorliegen können, insbesondere weitere Mischaggregate, aber auch die elektronische Bilderfassungsvorrichtung und die elektronische Datenverarbeitungsvorrichtung. Durch den Ausdruck "Mischersystem" wird dabei auch ausgedrückt, dass die Bestandteile des Mischersystems nicht zwangsläufig in eine einzelne Vorrichtung integriert sein müssen, wobei insbesondere für die elektronische Datenverarbeitungsvorrichtung eine zentrale Umsetzung außerhalb der eigentlichen Mischervorrichtung bevorzugt ist. Bevorzugt ist nämlich ein erfindungsgemäßes Verfahren, wobei die elektronische Datenverarbeitungsvorrichtung durch eine von der Mischvorrichtung, die das Mischaggregat umfasst, separate zentrale Datenverarbeitungsvorrichtung gebildet wird, bevorzugt durch einen zentralen Server oder eine Cloud. Möglich wäre alternativ ein erfindungsgemäßes Verfahren, wobei die elektronische Datenverarbeitungsvorrichtung Bestandteil der Mischvorrichtung ist, die das Mischaggregat umfasst.

In Übereinstimmung mit der fachmännischen Erwartung ist das Mischersystem dazu in der Lage, Bestandteile einer herzustellenden Kautschukmischung zu mischen. Hierfür verfügt das Mischersystem über ein Mischaggregat, in dessen Mischkammer die Bestandteile der herzustellenden Kautschukmischung gemischt werden können. Auch wenn es theoretisch möglich wäre, das erfindungsgemäße Verfahren für Mischaggregate umzusetzen, bei denen es sich um geschlossene Mischaggregate handelt, bspw. solche Mischaggregate, welche im Betrieb durch einen Stempel verschlossen werden, erachten es die Erfinder für im Wesentlichen alle Ausführungsformen als bevorzugt, wenn ein offenes Mischaggregat eingesetzt wird, d. h. ein Mischaggregat, dessen Mischkammer während des Mischprozesses nicht vollständig verschlossen ist. Bevorzugt ist daher ein erfindungsgemäßes Verfahren, wobei das Mischaggregat ein offenes Mischaggregat ist.

Grundsätzlich können als Mischaggregat sämtliche dem Fachmann bekannten Mischer eingesetzt werden, bspw. auch Walzenmischer, wodurch apparativ relativ unaufwendige Verfahren erhalten werden können. Bevorzugt ist ein erfindungsgemäßes Verfahren, wobei das offene Mischaggregat ein offener Walzenmischer ist.

Als besonders bevorzugt erachten die Erfinder jedoch für im Wesentlichen sämtliche Ausführungsformen den Einsatz eines Tandemmischers. Solche "Tandemmischer" weisen eine Obermaschine und eine unterhalb der Obermaschine angeordnete Untermaschine auf. Die Obermaschine verfügt hierbei regelmäßig über einen sogenannten Stempelkneter, wobei die Untermaschine üblicherweise mit einer stempellosen Kneteinrichtung ausgestattet ist und ein in der Regel größeres Volumen besitzt.

Bei Einsatz von Tandemmischern kann das erfindungsgemäße Verfahren nach Einschätzung der Erfinder besonders effizient in der Untermaschine durchgeführt werden, welche als offenes Mischaggregat betrieben wird. Bevorzugt ist also ein erfindungsgemäßes Verfahren, wobei das Mischersystem einen Tandemmischer umfasst. Bevorzugt ist zusätzlich oder alternativ ein erfindungsgemäßes Verfahren, wobei das offene Mischaggregat die Untermaschine eines Tandemmischers ist. Bevorzugt ist zusätzlich oder alternativ ein erfindungsgemäßes Verfahren, wobei das offene Mischaggregat ein stempelloser Mischer ist. Bevorzugt ist hierbei ein erfindungsgemäßes Verfahren, wobei die elektronische Bilderfassungsvorrichtung in dem Kanal zwischen der Obermaschine und der Untermaschine des Tandemmischers angeordnet ist.

Neben dem Mischaggregat und der elektronischen Datenverarbeitungsvorrichtung umfasst das erfindungsgemäß einzusetzende Mischersystem zudem zumindest eine elektronische Bilderfassungsvorrichtung. Diese elektronische Bilderfassungsvorrichtung ist dafür vorgesehen und bestimmt, im erfindungsgemäßen Verfahren Bildaufnahmen der Mischkammer des Mischaggregates sowie der darin gemischten Komponenten aufzunehmen. Nach Einschätzung der Erfinder ist es hierbei prinzipiell ausreichend, lediglich eine elektronische Bilderfassungsvorrichtung vorzusehen, was insbesondere mit einem verringerten apparativen Aufwand einhergeht. Gleichzeitig lassen sich durch den Einsatz mehrerer elektronischer Bilderfassungsvorrichtungen aussagekräftigere Bilddaten über die in der Mischkammer vorliegenden Bestandteile erhalten, sodass eine vorteilhaftere Bewertung des Mischzustandes ermöglicht wird. Bevorzugt ist ein erfindungsgemäßes Verfahren, wobei das Mischersystem zwei oder mehr, bevorzugt drei oder mehr, elektronische Bilderfassungsvorrichtungen umfasst. Bevorzugt ist zusätzlich oder alternativ ein erfindungsgemäßes Verfahren, wobei in Verfahrensschritt c) zwei oder mehr, bevorzugt eine Vielzahl von, Bildaufnahmen von unterschiedlichen elektronischen Bilderfassungsvorrichtungen erfasst werden.

Auch wenn es theoretisch denkbar wäre, die elektronischen Bilderfassungsvorrichtungen im Inneren der Mischkammer anzuordnen, ist dies mit Blick auf die zu erwartenden Verunreinigungen und die zu erwartende Lebensdauer der Bilderfassungsvorrichtungen nicht bevorzugt. Grundsätzlich wäre es denkbar, die Sichtverbindung zwischen der Bilderfassungsvorrichtung und dem im Inneren des Mischaggregats gemischten Bestandteilen derart durch die Wand des Mischaggregats hindurch, zu ermöglichen, indem dieses beispielsweise mit einem Sichtfenster ausgerüstet wird. Dies ist jedoch mit Blick auf die konstruktive Ausgestaltung der Mischaggregate sowie den zu erwartenden Verschmutzungsgrad solcher Sichtfenster explizit weniger bevorzugt. Vielmehr ist es beim Einsatz der, wie vorstehend beschrieben, bevorzugt eingesetzten offenen Mischaggregate bevorzugt, die Bildaufnahmen durch die Beschickungsöffnung hindurch zu erstellen, sodass der Sichtpfad nicht blockiert wird. Bevorzugt ist ein erfindungsgemäßes Verfahren, wobei die eine oder die mehreren elektronischen Bilderfassungsvorrichtungen außerhalb der Mischkammer angeordnet sind.

Beim besonders bevorzugten Fall des Einsatzes eines Tandemmischers kann die elektronische Bilderfassungsvorrichtung beispielsweise oberhalb der Beschickungsöffnung der Untermaschine außerhalb des Schachtes angeordnet werden, wenn der Schacht mit einem Einschnitt versehen wird, durch den hindurch die Bilderfassungsvorrichtung in die Mischkammer schauen kann. Bevorzugt ist ein erfindungsgemäßes Verfahren, wobei die eine oder die mehreren elektronischen Bilderfassungsvorrichtungen so angeordnet sind, dass sie Bildaufnahmen der Mischkammer des offenen Mischaggregats durch eine Beschickungsöffnung des Mischaggregats hindurch erfassen können.

Grundsätzlich eignen sich für die elektronische Bilderfassungsvorrichtung sämtliche Vorrichtungen, die es erlauben, eine Bildinformation der in der Mischkammer gemischten Bestandteile zu erfassen. Entsprechende Vorrichtungen sind dabei von zahlreichen Anbietern kommerziell erhältlich. Mit Blick auf eine möglichst einfache Umsetzung, eine geringe Komplexität sowie ein hervorragendes Ergebnis bei der Bewertung des Mischzustandes erachten die Erfinder den Einsatz von Kameras als bevorzugt. Eine besonders bevorzugte Ausgestaltung ergibt sich hierbei beim Einsatz von Infrarotkameras. Diese erlauben es, die Bildinformation, anhand derer der Mischzustand im erfindungsgemäßen Verfahren bestimmt werden soll, zusätzlich um eine Temperaturinformation zu bereichern, sodass insbesondere die Kombination mit einem Verfahren möglich wird, wie es beispielsweise in der EP 4215328 A1 offenbart ist. Bevorzugt ist ein erfindungsgemäßes Verfahren, wobei die eine oder die mehreren elektronischen Bilderfassungsvorrichtungen ausgewählt sind aus der Gruppe bestehend aus Kameras und Infrarotkameras, bevorzugt Infrarotkameras.

Das erfindungsgemäße Verfahren dient der Herstellung von Kautschukmischungen, insbesondere vulkanisierbaren Kautschukmischungen. Vulkanisierbare Kautschukmischungen an sich, sowie die darin verarbeiteten Substanzen, sind dem Fachmann im Bereich der Technik umfassend vertraut. Es kann als Vorteil gesehen werden, dass das erfindungsgemäße Verfahren im Wesentlichen für sämtliche Arten von vulkanisierbaren Kautschukmischungen verwendet werden kann und dahingehend nicht beschränkt ist. Entsprechend kann an dieser Stelle für weitere Informationen auf den einschlägigen Stand der Technik zu Kautschukmischungen verwiesen werden. Bevorzugt ist ein erfindungsgemäßes Verfahren, wobei die Bestandteile der herzustellenden Kautschukmischung zumindest einen Dienkautschuk umfassen, wobei die Bestandteile der herzustellenden Kautschukmischung bevorzugt zudem einen oder mehrere weitere Bestandteile umfassen, die ausgewählt sind aus der Gruppe bestehend aus Füllstoffen, Weichmachern, Kupplungsagenzien, und Prozesshilfsmitteln.

Grundlage für die Herstellung der Kautschukmischung im erfindungsgemäßen Verfahren ist die Eingabe der zu mischenden Bestandteile in die Mischkammer des Mischaggregates im Verfahrensschritt a). Die Zugabe kann hierbei prinzipiell in beliebiger Art und Weise erfolgen, beispielsweise gleichzeitig oder nacheinander. Darüber hinaus ist es jedoch auch denkbar, dass die Bestandteile der herzustellenden Kautschukmischung schon bereits in einem zumindest teilweise vorgemischten Zustand eingegeben werden. Insbesondere bei der bevorzugten Ausgestaltung als Tandemmischer, bei dem das erfindungsgemäße Verfahren in der Untermaschine durchgeführt wird, können die Bestandteile der herzustellenden Kautschukmischung zumindest teilweise in vorgemischter Form aus der Obermaschine eingegeben werden, wobei in der Untermaschine regelmäßig weitere Additive bzw. Bestandteile des Vulkanisationssystems zugegeben werden. Bevorzugt ist ein erfindungsgemäßes Verfahren, wobei das Eingeben von Bestandteilen der herzustellenden Kautschukmischung in Form einer vorgemischten Mischung der Bestandteile erfolgt.

Das Mischaggregat, in das die Bestandteile der herzustellenden Kautschukmischung eingegeben werden, wird im Verfahrensschritt b) auch betrieben, um die Bestandteile miteinander zu vermischen, wie es der Erwartung des Fachmannes entspricht.

In Verfahrensschritt c) erfolgt nun die Erfassung von Bildaufnahmen des Inneren der Mischkammer sowie der darin gemischten Bestandteile. Die Bildaufnahmen werden dabei mit der elektronischen Bilderfassungsvorrichtung erfasst. Zumindest theoretisch wäre es möglich, im erfindungsgemäßen Verfahren lediglich eine Bildaufnahme zu erfassen und diese auszuwerten, um den Mischzustand zu bewerten, beispielsweise für jede Charge nach einer vorgegebenen Zeit, oder unmittelbar vor dem Ausgeben der gemischten Kautschukmischung. Auch wenn hierdurch bereits Vorteile erzielt werden können, ist es nach Einschätzung der Erfinder besonders vorteilhaft, nicht nur zu jedem Zeitpunkt mehrere Bildaufnahmen für die Auswertung heranzuziehen, wie es durch den Einsatz mehrerer Bilderfassungsvorrichtungen ermöglicht wird, sondern vor allem auch in zeitlichen Abständen Bildaufnahmen zu erfassen, um die zeitliche Entwicklung des Mischzustandes dadurch zu bewerten, dass die Verfahrensschritte c) und d) während des Betriebs des Mischaggregates in zeitlichen Abständen mehrfach durchgeführt werden. Hierbei ist es insbesondere auch möglich, dass es sich bei der elektronischen Bilderfassungsvorrichtung um eine Videokamera handelt, welche ein Video des Inneren der Mischkameras aufnimmt, von dem anschließend einzelne Frames für die nachgelagerte Auswertung verwendet werden. Bevorzugt ist ein erfindungsgemäßes Verfahren, wobei in Verfahrensschritt c) zwei oder mehr, bevorzugt eine Vielzahl von, Bildaufnahmen erfasst werden, besonders bevorzugt in vorbestimmten zeitlichen Abständen und/oder von unterschiedlichen elektronischen Bilderfassungsvorrichtungen, wobei der Verfahrensschritt d) mehrfach durchgeführt wird, um den Mischzustand der gemischten Bestandteile in vorbestimmten zeitlichen Abständen zu bewerten. Bevorzugt ist zusätzlich oder alternativ ein erfindungsgemäßes Verfahren, wobei die erfassten Bildaufnahmen Einzelbilder eines von der elektronischen Bilderfassungsvorrichtung aufgenommenen Videos sind, wobei der Verfahrensschritt d) bevorzugt mehrfach durchgeführt wird, um den Mischzustand der gemischten Bestandteile in vorbestimmten zeitlichen Abständen zu bewerten.

Mit Blick auf die vorstehenden Ausführungen versteht der Fachmann, dass sowohl die Auswertung von mehreren Bildaufnahmen zur Bewertung des Mischungszustands an einem Zeitpunkt als auch die Auswertung von mehreren Bildaufnahmen, welche mit dem Mischungszustand an unterschiedlichen Zeitpunkten korrelieren, kombiniert werden kann, um ein möglichst gutes Verständnis der Entwicklung der Mischungsqualität zu gewinnen. Insoweit ist es auch möglich, mehrere Bildaufnahmen zur Bewertung eines Mischzustandes heranzuziehen, welche in einem geringen zeitlichen Abstand voneinander aufgenommen wurden, um diese näherungsweise dem gleichen Zeitpunkt und dem gleichen Mischzustand zuzuweisen, beispielsweise indem einzelne Frames eines Videos über zehn Sekunden verteilt herangezogen werden, um eine aussagekräftigere Datenlage für die Bewertung des Zustandes zu dem Beobachtungszeitraum zu erhalten, wobei ein gewisser Mittelungseffekt über den betrachteten Zeitraum erreicht wird. Der Vorteil einer solchen Mittelung, der sich auch bei Anwendung des Verfahrens mit einer Vielzahl von zeitlich hintereinander aufgenommenen Einzelaufnahmen ergibt, ist darin zu sehen, dass zufällig auftretende Unzulänglichkeiten auf den Bildaufnahmen kompensiert werden können, beispielsweise eine kurzfristig starke Staubentwicklung, welche die Sicht der Bilderfassungseinrichtung einschränkt.

In Verfahrensschritt d) erfolgt nun das Auswerten der erfassten Bildaufnahmen des Inneren der Mischkammer mit dem Zweck, den Mischzustand der gemischten Bestandteile zu bewerten. Auch wenn die Bewertung, wie nachfolgend weiter offenbart, mittels maschinellen Lernens erfolgt, versteht der Fachmann, dass er hinsichtlich der Festlegung des Bewertungskriteriums, welches sich im Training des Bewertungsmoduls niederschlagen wird, in vorteilhafter Weise frei ist und die Bewertungskriterien an seinen jeweiligen Anwendungsfall anpassen kann. Grundsätzlich ist es möglich, auch Parameter, wie den Füllungsgrad der Mischkammer, heranzuziehen, was insbesondere dann zweckmäßig ist, wenn im Rahmen des Mischprozesses mit der Zeit weitere Komponenten zugesetzt werden und somit der Füllungsgrad der Mischkammer eine Bewertung dahingehend erlaubt, ob die Mischung vollständig ist, d. h., dass alle Komponenten vorliegen. Darüber hinaus können jedoch auch Faktoren wie das Ausmaß der Staubentwicklung herangezogen werden, da das Ausstauben von eingegebenen Bestandteilen bedeutet, dass diese Anteile nicht in die Kautschukmischung eingemischt sind und insoweit ein unzureichender Mischzustand vorliegt. Als ganz besonders vorteilhaft erachten die Erfinder jedoch den Einsatz des erfindungsgemäßen Verfahrens zur Bewertung der Morphologie der Mischung und insbesondere deren Homogenität. Im Rahmen der vorliegenden Erfindung bezeichnet der Ausdruck Homogenität dabei die stoffliche Homogenität, d. h., wie homogen die Bestandteile der Mischung miteinander vermischt sind und nicht andere Faktoren, wie beispielsweise die Gleichmäßigkeit der Temperaturverteilung in der Mischung, da diese nicht dem "Mischzustand" der gemischten Bestandteile zugerechnet wird. In der Praxis kann es vorkommen, dass die Gewährleistung einer ausreichenden Homogenität der Mischung in hinreichend reproduzierbarer Weise nur wenig Probleme macht und/oder von den eingesetzten Arbeitskräften gut zu kontrollieren ist. Auch in diesen Fällen sind jedoch Instabilitäten im Mischprozess, welche mit dem erfindungsgemäßen Verfahren in vorteilhafter Weise durch Bewertung des Mischzustandes erkannt werden können, trotzdem problematisch. Entsprechend ist es für einige Ausgestaltungen des erfindungsgemäßen Verfahrens bevorzugt, auf die entsprechenden Instabilitätsmerkmale abzustellen, insbesondere das Ausmaß der Staubentwicklung über der Mischung und die Granularität sowie die Oberflächenstruktur der Mischung, wo sich insbesondere eine brüchige und/oder krümelige Struktur als unzureichender Mischzustand erfassen lässt. Bevorzugt ist ein erfindungsgemäßes Verfahren, wobei das Bewerten des Mischzustandes einen oder mehrere Parameter bewertet, die ausgewählt sind aus der Gruppe bestehend aus dem Füllungsgrad der Mischkammer, der Staubentwicklung über der Mischung, der Granularität der Mischung, der Oberflächenstruktur der Mischung und der Homogenität der Mischung, bevorzugt ausgewählt sind aus der Gruppe bestehend aus der Staubentwicklung über der Mischung, der Granularität der Mischung, der Oberflächenstruktur der Mischung und der Homogenität der Mischung, besonders bevorzugt ausgewählt sind aus der Gruppe bestehend aus der Granularität der Mischung, der Oberflächenstruktur der Mischung und der Homogenität der Mischung. Bevorzugt ist zusätzlich oder alternativ auch ein erfindungsgemäßes Verfahren, wobei das Bewerten des Mischzustandes einen oder mehrere Parameter bewertet, die ausgewählt sind aus der Gruppe bestehend aus der Staubentwicklung über der Mischung, der Granularität der Mischung und der Oberflächenstruktur der Mischung.

Die durch Auswertung der erfassten Bildaufnahmen erhaltene Bewertung des Mischzustandes kann zielführenderweise dadurch erfolgen, dass der Mischzustand, bzw. eine mit dem Mischzustand korrelierende und infolge der Bewertung erhaltene Kenngröße in die Klassen einer Klassifikation klassiert wird, um den im Verfahren eingesetzten Arbeitskräften eine hinreichend detaillierte, aber trotzdem leicht zu erfassende Zusammenstellung zu liefern. Beispielsweise könnte die Staubentwicklung in eine von fünf Klassen von keine Staubentwicklung bis sehr starke Staubentwicklung klassiert werden oder die Granularität der Mischung in zwei Klassen als zu krümelig oder ausreichend. Bei Heranziehung von mehreren Bewertungsparametern können diese kombiniert werden, um beispielsweise aus den vorstehenden Beispielen zur Bewertung der Staubentwicklung und der Granularität der Mischung insgesamt zehn Klassen zu erhalten. Bevorzugt ist ein erfindungsgemäßes Verfahren, wobei das Bewerten in Verfahrensschritt d) durch Klassieren des Mischzustandes in die Klassen einer Klassifikation erfolgt. Bevorzugt ist hierbei ein erfindungsgemäßes Verfahren, wobei die Klassifikation drei oder mehr, bevorzugt vier oder mehr, Klassen umfasst.

Bevorzugt ist ebenso ein erfindungsgemäßes Verfahren, wobei die Klassen der Klassifikation mit einem oder mehreren Parametern korrelieren, die ausgewählt sind aus der Gruppe bestehend aus dem Füllungsgrad der Mischkammer, der Staubentwicklung über der Mischung, der Granularität der Mischung, der Oberflächenstruktur der Mischung und der Homogenität der Mischung, bevorzugt ausgewählt sind aus der Gruppe bestehend aus der Staubentwicklung über der Mischung, der Granularität der Mischung und der Oberflächenstruktur der Mischung. Bevorzugt ist zusätzlich oder alternativ ein erfindungsgemäßes Verfahren, wobei das Bewertungsmodul dazu eingerichtet ist, den Mischzustand in die Klassen einer Klassifikation zu klassieren.

Die Auswertung und das Bewerten erfolgen mit einem auf maschinellem Lernen basierenden Bewertungsmodul. Das Konzept des maschinellen Lernens an sich ist dem Fachmann im Bereich der Technik heutzutage gut vertraut. Geeignete Softwarelösungen, welche in Ansehung der vorstehenden Offenbarung durch ein wie vorstehend beschriebenes Training an die Zwecke der vorliegenden Erfindung und damit für den Einsatz im erfindungsgemäßen Verfahren angepasst werden können, sind heutzutage von zahlreichen Anbietern kommerziell erhältlich oder können von entsprechenden Dienstleistern auf Anfrage programmiert werden. Bevorzugt ist ein erfindungsgemäßes Verfahren, wobei das Bewertungsmodul auf einem Algorithmus zum maschinellen Lernen basiert, der ausgewählt ist aus der Gruppe bestehend aus Algorithmen des überwachten Lernens, bevorzugt ausgewählt ist aus der Gruppe bestehend aus logistische Regression, Support vector machines, K-nearest neighbors-Verfahren, Entscheidungsbaumverfahren und künstlichen neuronalen Netzen, besonders bevorzugt ausgewählt ist aus der Gruppe bestehend aus künstlichen neuronalen Netzen.

Wie im Bereich des maschinellen Lernens üblich, kommt dem Training des Bewertungsmoduls eine entscheidende Bedeutung zu. Hierfür umfasst der herangezogene Satz von Trainingsdaten eine Vielzahl von Trainingsbildaufnahmen des Inneren einer Mischkammer eines Trainingsmischaggregats und der darin gemischten Bestandteile einer herzustellenden Trainingskautschukmischung, für die der Mischzustand der gemischten Bestandteile bekannt ist.

Es kann als großer Vorteil des erfindungsgemäßen Verfahrens gesehen werden, dass der für das Training benötigte Satz von Trainingsdaten für den Fachmann in der Praxis besonders leicht zu erhalten ist. Nach der Installation der Bilderfassungsvorrichtung muss der Fachmann lediglich seine etablierten Prozesse weiter durchführen und den Mischzustand in gewohnter Weise durch die eingesetzten Arbeitskräfte bewerten lassen. Die entsprechende Bewertung kann dann, beispielsweise durch einen entsprechenden Zeitstempel, mit den entsprechenden Bildaufnahmen aus der Mischkammer korreliert werden, um so in relativ schneller und unaufwendiger Weise ein geeignetes Trainingsset zu erhalten.

Wegen der grundsätzlichen Ähnlichkeit vieler Kautschukmischungen sowie der zumeist grundsätzlichen Ähnlichkeit der meisten Mischaggregate erachten es die Erfinder als großen Vorteil der Erfindung, dass das Bewertungsmodul relativ effizient so ausgelegt werden kann, dass es auf eine große Anzahl von verschiedenen Kautschukmischungen und die Verarbeitung in einer Vielzahl verschiedener Mischaggregate angepasst werden kann, sodass das Bewertungsmodul in vielen Mischvorgängen eingesetzt werden kann, insbesondere auch mit verschiedenen Mischersystemen.

Gleichzeitig regen die Erfinder an, dass sich der Trainingsaufwand reduzieren und/oder die Bewertungsqualität verbessern lässt, wenn das Training des Bewertungsmoduls vor allem mit Trainingsdaten erfolgt, welche möglichst weitgehend an die Verfahrensparameter angelehnt sind, welche im erfindungsgemäßen Verfahren eingesetzt werden.

Zur Verringerung des Trainingsaufwandes und/oder der Verbesserung der Bewertungsqualität können die Trainingsdaten insbesondere auf den Mischertyp des Mischaggregats abgestimmt werden, beispielsweise weil der Typ des Trainingsmischaggregates dem Typ des Mischaggregates entspricht, welches im erfindungsgemäßen Verfahren eingesetzt wird. So ist es beispielsweise möglich, spezifische Bewertungsmodule für die Auswertung von Bildaufnahmen aus Walzenmischern oder aus Untermaschinen von Tandemmischern zu trainieren. Darüber hinaus können die Mischaggregate auch weiter abgestimmt werden, beispielsweise. indem die Trainingsmischaggregate vom gleichen Hersteller stammen, wie das im erfindungsgemäßen Verfahren eingesetzte Mischaggregat. In einer Weiterführung dieser Überlegung ist es insbesondere auch möglich, das erfindungsgemäße Verfahren zielgenau an die vom Fachmann spezifisch eingesetzten Anlagen anzupassen, in dem das Training zumindest teilweise mit solchen Trainingsdaten erfolgt, die in dem Mischsystem aufgenommen wurden, welches auch im erfindungsgemäßen Verfahren eingesetzt wird. Bevorzugt ist ein erfindungsgemäßes Verfahren, wobei das Training des Bewertungsmoduls zumindest teilweise, bevorzugt überwiegend, besonders bevorzugt im Wesentlichen vollständig, mit einem Satz von Trainingsdaten erfolgt, für die der Typ des Trainingsmischaggregat dem Typ des Mischaggregats des Mischersystems entspricht, wobei das Training des Bewertungsmoduls bevorzugt zumindest teilweise, bevorzugt überwiegend, besonders bevorzugt im Wesentlichen vollständig, mit einem Satz von Trainingsdaten erfolgt, für die das Trainingsmischaggregat dem Mischaggregat des Mischersystems entspricht.

Neben der Abstimmung des Mischaggregates kann auch die chemische Natur der Kautschukmischungen eingegrenzt werden, beispielsweise indem sowohl in den Trainingsdaten als auch im erfindungsgemäßen Verfahren rußhaltige Kautschukmischungen eingesetzt werden, die inhärent anders aussehen als rußfreie Kautschukmischungen. Bevorzugt ist somit ein erfindungsgemäßes Verfahren, wobei das Training des Bewertungsmoduls zumindest teilweise, bevorzugt überwiegend, besonders bevorzugt im Wesentlichen vollständig, mit einem Satz von Trainingsdaten erfolgt, für die Trainingskautschukmischung zumindest teilweise, bevorzugt zu einem Massenanteil von 50 % oder mehr, besonders bevorzugt zu einem Massenanteil von 70 % oder mehr, besonders bevorzugt zu einem Massenanteil von 90 % oder mehr, ganz besonders bevorzugt zu einem Massenanteil von 98 % oder mehr, die gleichen Bestandteile umfasst, wie die im Verfahren hergestellte Kautschukmischung, bezogen auf die Masse der Trainingskautschukmischung. Bevorzugt ist zusätzlich oder alternativ ein erfindungsgemäßes Verfahren, wobei sich der Massenanteil der Bestandteile, welche sowohl in der hergestellten Kautschukmischung als auch der Trainingskautschukmischung vorliegen, an der jeweiligen Kautschukmischung, zwischen der hergestellten Kautschukmischung und der Trainingskautschukmischung um weniger als 50 %, bevorzugt weniger als 20 %, besonders bevorzugt weniger als 10 %, ganz besonders bevorzugt weniger als 5 %, insbesondere bevorzugt weniger als 2 %, unterscheidet.

Der Fachmann versteht darüber hinaus, dass die vorstehenden Ausführungen der Abstimmung des Mischaggregats auf das Trainingsmischaggregat in gleicher Weise auf die eingesetzten elektronischen Bilderfassungsvorrichtungen zutreffen, sodass es zielführend ist, wenn die Bildaufnahmen der Trainingsdaten zumindest mit dem gleichen Typ an elektronischen Bilderfassungsvorrichtungen aufgenommen wurden, beispielsweise in beiden Fällen mit Infrarotkameras, wobei insoweit als zusätzlicher Optimierungsfaktor hinzukommt, dass es zielführend ist, dass die Bildaufnahmen in den erfindungsgemäßen Verfahren und den Trainingsdaten zumindest teilweise, bevorzugt möglichst weitgehend, aus einer ähnlichen oder sogar der gleichen Perspektive aufgenommen wurden.

Das Ergebnis der Auswertung in Verfahrensschritt d) kann in besonders effizienter Weise den im Verfahren eingesetzten Arbeitskräften bereitgestellt werden, damit diese die Überwachung bzw. Steuerung des Verfahrens auf Grundlage der ausgegebenen Bewertung vornehmen können. Denkbar ist entsprechend ein erfindungsgemäßes Verfahren, wobei das Verfahren zusätzlich den folgenden Verfahrensschritt umfasst:
e) Ausgeben der erhaltenen Bewertung des Mischzustandes der gemischten Bestandteile über eine Ausgabeeinheit. Bevorzugt ist insoweit ein erfindungsgemäßes Verfahren, wobei die Ausgabeeinheit bevorzugt ein Display des Mischersystems oder eines mit dem Mischersystem verknüpften mobilen Endgerät ist, bevorzugt ein Mobiltelefon oder Tablet.

Mit Blick auf eine vorteilhafte Automatisierbarkeit und eine angestrebte Verringerung des "Faktors Mensch", erachten es die Erfinder jedoch für besonders bevorzugt, wenn bestimmte Ergebnisse der Bewertung zu einer automatisierten Reaktion führen, bei der es sich neben der Ausgabe von Warnsignalen sogar auch um die Abschaltung der Anlage handeln kann. Bevorzugt ist ein erfindungsgemäßes Verfahren, wobei automatisch ein oder mehrere Reaktionsmaßnahmen ausgelöst werden wenn die erhaltene Bewertung anzeigt, dass die gemischten Bestandteile einen vorbestimmten Mischzustand aufweisen. Bevorzugt ist hierbei ein erfindungsgemäßes Verfahren, wobei die eine oder die mehreren Reaktionsmaßnahmen ausgewählt sind aus der Gruppe bestehend aus Ausgabe eines optischen Warnsignals, Ausgabe eines akustischen Warnsignals, Veranlassung einer Wartung des Mischersystems und der Notabschaltung des Mischersystems.

Neben der Ausgabe des Bewertungsergebnisses an die eingesetzten Arbeitskräfte und der automatisierten Veranlassung von Reaktionsmaßnahmen im Falle von bestimmten Ereignissen, beispielsweise einer starken Staubentwicklung, erachten es die Erfinder für besonders vorteilhaft, das Verfahren zum Betrieb des Mischersystems zumindest teilweise in Abhängigkeit der erzielten Bewertung zu steuern. Dies kann hierbei durch die eingesetzten Arbeitskräfte erfolgen, wird nach Einschätzung der Erfinder in besonders bevorzugten Ausgestaltungen jedoch automatisiert erfolgen, sodass eine bestimmte Bewertung des Mischzustandes automatisiert dazu führt, dass die Betriebsparameter des Mischersystems verändert werden, beispielsweise hinsichtlich der Leistung des Mischaggregats und/oder der Mischtemperatur, wobei eine entsprechende Steuerung bevorzugt durch die elektronische Datenverarbeitungsvorrichtung veranlasst werden kann. Bevorzugt ist ein erfindungsgemäßes Verfahren, wobei das Verfahren in Abhängigkeit der in Verfahrensschritt d) erhaltenen Bewertung gesteuert und/oder geregelt wird, bevorzugt durch Anpassung eines oder mehrerer Betriebsparameter des Mischersystems, besonders bevorzugt automatisiert. Bevorzugt ist zusätzlich oder alternativ ein erfindungsgemäßes Verfahren, wobei nachfolgende Durchläufe des Verfahrens in Abhängigkeit der in Verfahrensschritt d) erhaltenen Bewertung durchgeführt werden, bevorzugt durch Anpassung eines oder mehrerer Betriebsparameter des Mischersystems in einer elektronisch hinterlegten Mischvorschrift, besonders bevorzugt automatisiert.

Die Erfindung betrifft zudem ein Mischersystem, umfassend:
i) ein Mischaggregat mit einer Mischkammer zum Mischen von Bestandteilen einer herzustellenden Kautschukmischung,
ii) eine elektronische Bilderfassungsvorrichtung zum Erfassen von Bildaufnahmen der Mischkammer des Mischaggregats, und
iii) eine elektronische Datenverarbeitungsvorrichtung mit einer Speichereinheit,

wobei auf der Speichereinheit ein auf maschinellem Lernen basierendes Bewertungsmodul gespeichert ist,
wobei die elektronische Datenverarbeitungsvorrichtung dazu eingerichtet ist, von der elektronischen Bilderfassungsvorrichtung erfasste Bildaufnahmen des Inneren der Mischkammer des Mischaggregats und den darin gemischten Bestandeile einer herzustellenden Kautschukmischung als Eingabe in das Identifikationsmodul zu geben und den Mischzustand der gemischten Bestandteile mit dem Bewertungsmodul zu bewerten,
wobei das Bewertungsmodul dazu trainiert ist, aus Bildaufnahme des Inneren der Mischkammer des Mischaggregats und den darin gemischten Bestandeile einer herzustellenden Kautschukmischung den Mischzustand der gemischten Bestandteile zu bewerten, wobei das Training mit einem Satz von Trainingsdaten erfolgt, welcher eine Vielzahl von Trainingsbildaufnahme des Inneren einer Mischkammer eines Trainingsmischaggregats und der darin gemischten Bestandeilen einer herzustellenden Trainingskautschukmischung umfasst, für die der Mischzustand der gemischten Bestandteile bekannt ist.

Offenbart wird außerdem ein Computerprogrammprodukt, umfassend Befehle, die bei der Ausführung des Programms durch eine Datenverarbeitungsvorrichtung eines Mischersystems, diese dazu veranlassen, den Verfahrensschritt d) des erfindungsgemäßen Verfahrens durchzuführen.

Die Erfindung betrifft auch ein Verfahren zum Herstellen eines Fahrzeugreifens, umfassend die Verfahrensschritte des erfindungsgemäßen Verfahrens, sowie die Schritte:
x) Herstellen eines Fahrzeugreifenrohlings, wobei der Fahrzeugreifenrohling die hergestellte Kautschukmischung in zumindest einem Bauteil umfasst, und
y) Vulkanisieren des Fahrzeugreifenrohlings zum Erhalt des Fahrzeugreifens.

Nachfolgend werden die Erfindung und bevorzugte Ausführungsformen der Erfindung unter Bezugnahme auf die beiliegende Figur näher erläutert und beschrieben. Dabei zeigt:

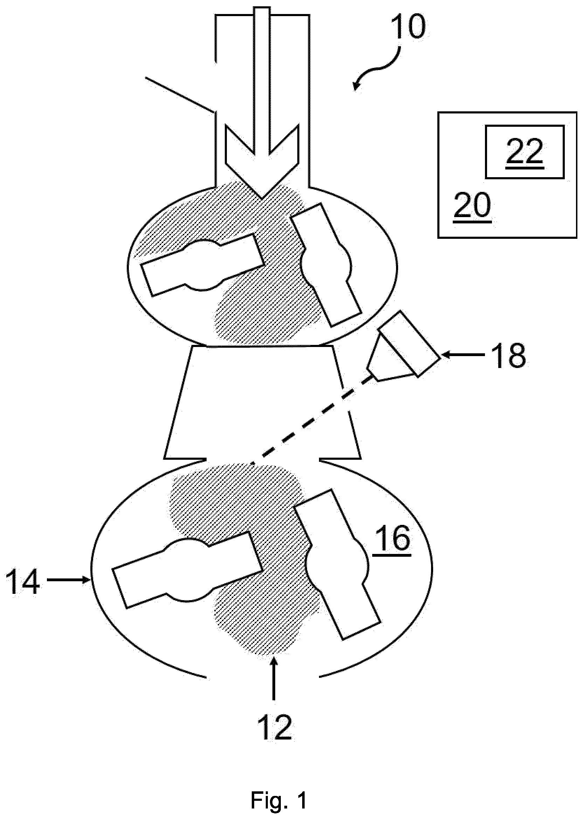

- Fig. 1: eine schematische Darstellung eines erfindungsgemäßen Mischersystems im Einsatz in einem erfindungsgemäßen Verfahren in einer bevorzugten Ausführungsform.

Fig. 1 zeigt ein erfindungsgemäßes Mischersystem 10 umfassend einen Tandemmischer. Der Tandemmischer umfasst als Obermaschine einen Mischer mit Stempel und als Untermaschine ein offenes und stempelloses Mischaggregat 14 mit einer Mischkammer 16 zum Mischen von Bestandteilen einer herzustellenden Kautschukmischung 12.

Zwischen der Obermaschine und der Untermaschine, also oberhalb des offenen Mischaggregats 14, ist außerhalb des Tandemmischers eine als Infrarotkamera ausgeführte elektronische Bilderfassungsvorrichtung 18 zum Erfassen von Bildaufnahmen der Mischkammer 16 angeordnet. Die Bildaufnahmen werden in der Ausführungsform der Fig. 1 durch ein Loch in der Wand eines zwischen Obermaschine und Untermaschine angeordneten Schachts erstellt.

Das Mischersystem 10 umfasst überdies eine außerhalb des Tandemmischers angeordnete elektronische Datenverarbeitungsvorrichtung 20 mit einer Speichereinheit 22.

Für die Vorbereitung eines Einsatzes des in Fig. 1 gezeigten Mischersystems 10 in einem erfindungsgemäßen Verfahren werden zunächst Bestandteile der herzustellenden Kautschukmischung 12, also beispielsweise Dienkautschuk, Füllstoffe, Weichmacher, Kupplungsagenzien, und Prozesshilfsmittel, in die Obermaschine eingegeben und dort zu einer vorgemischten Mischung der Bestandteile vermischt. Durch eine Ausgabeöffnung der Obermaschine wird die derart vorgemischte Mischung sowie ggf. weitere Bestandteile der herzustellenden Kautschukmischung in die Mischkammer 16 der Untermaschine, das heißt des offenen Mischaggregats 14 zum Mischen eingegeben und dort gemischt.

Mit der elektronischen Bilderfassungsvorrichtung 18 werden mehrere Bildaufnahmen des Inneren der Mischkammer 16 in vorbestimmten zeitlichen Abständen erfasst, sodass die Bildaufnahmen die darin gemischten Bestandteile abbilden.

Durch eine auf maschinellem Lernen basierende Auswertung der erfassten Bildaufnahmen wird der Mischzustand der gemischten Bestandteile mit der elektronischen Datenverarbeitungsvorrichtung 20 bewertet. Hierbei werden im gezeigten Ausführungsbeispiel der Fig. 1 insbesondere die Granularität der Mischung und die stoffliche Homogenität der Mischung, bewertet, in dem die Bildaufnahmen nach dem Mischzustand in mehrere Klassen einer Klassifikation klassiert werden, welche mit obigen Parametern korrelieren. Über die so erhaltene Bewertung wird das weitere Vermischen der Bestandteile der Kautschukmischung 12 gesteuert bzw. geregelt, insbesondere durch Anpassung eines oder mehrerer Betriebsparameter des Mischersystems 10.

Die auf maschinellem Lernen basierende Auswertung erfolgt mit einem auf der Speichereinheit 22 gespeicherten auf maschinellem Lernen basierenden Bewertungsmodul, in welches die erfassten Bildaufnahmen als Eingabe eingegeben werden und die Bewertung als Ausgabe ausgegeben wird, beispielsweise in der Form der Klasse, in die der jeweilige Zustand klassiert wird. Das Bewertungsmodul wird mittels eines Trainings mit einem Satz von Trainingsdaten trainiert, welcher eine Vielzahl von Trainingsbildaufnahmen des Inneren einer Mischkammer 16 eines Trainingsmischaggregats und der darin gemischten Bestandteile einer herzustellenden Trainingskautschukmischung umfasst, für die der Mischzustand der gemischten Bestandteile bekannt ist.

Das Resultat der Bewertung kann über eine Ausgabeeinheit, insbesondere ein mobiles Endgerät, an die im Verfahren eingesetzten Arbeitskräfte ausgegeben werden. Zusätzlich oder alternativ ist es möglich, eine Reaktionsmaßnahme auszulösen, wenn die erhaltene Bewertung anzeigt, dass die gemischten Bestandteile einen vorbestimmten Mischzustand aufweisen, beispielsweise in Form eines optischen oder akustischen Warnsignals oder einer Wartungsanzeige bzw. Notabschaltung des Mischersystems 10.

### Bezugszeichenliste

- 10: Mischersystem
- 12: Kautschukmischung
- 14: Mischaggregat
- 16: Mischkammer
- 18: elektronische Bilderfassungsvorrichtung
- 20: elektronische Datenverarbeitungsvorrichtung
- 22: Speichereinheit

## Patentansprüche

1. Verfahren zum Betrieb eines Mischersystems (10) bei der Herstellung einer Kautschukmischung (12), wobei das Mischersystem (10) umfasst:
i) ein Mischaggregat (14) mit einer Mischkammer (16) zum Mischen von Bestandteilen einer herzustellenden Kautschukmischung,
ii) eine elektronische Bilderfassungsvorrichtung (18) zum Erfassen von Bildaufnahmen der Mischkammer (16) des Mischaggregats (14), und
iii) eine elektronische Datenverarbeitungsvorrichtung (20) mit einer Speichereinheit (22),
umfassend die Verfahrensschritte:
a) Eingeben von Bestandteilen der herzustellenden Kautschukmischung (12) in die Mischkammer (16) des Mischaggregats (14),
b) Betreiben des Mischaggregats (14) zum Mischen der eingegebenen Bestandteile,
c) Erfassen zumindest einer Bildaufnahme des Inneren der Mischkammer (16) des Mischaggregats (14) und der darin gemischten Bestandeile mit der elektronischen Bilderfassungsvorrichtung (18),
d) Auswerten der erfassten Bildaufnahmen des Inneren der Mischkammer (16) zum Bewerten des Mischzustandes der gemischten Bestandteile mit der elektronischen Datenverarbeitungsvorrichtung (20),
wobei auf der Speichereinheit (22) ein auf maschinellem Lernen basierendes Bewertungsmodul gespeichert ist, wobei das Auswerten der erfassten Bildaufnahmen mit dem Bewertungsmodul erfolgt, wobei die erfassten Bildaufnahmen als Eingabe in das Bewertungsmodul gegeben werden, um den Mischzustand der gemischten Bestandteile zu bewerten,
wobei das Bewertungsmodul dazu trainiert ist, aus Bildaufnahmen des Inneren der Mischkammer (16) des Mischaggregats (14) und den darin gemischten Bestandteilen einer herzustellenden Kautschukmischung den Mischzustand der gemischten Bestandteile zu bewerten, wobei das Training mit einem Satz von Trainingsdaten erfolgt, welcher eine Vielzahl von Trainingsbildaufnahmen des Inneren einer Mischkammer eines Trainingsmischaggregats und der darin gemischten Bestandteile einer herzustellenden Trainingskautschukmischung umfasst, für die der Mischzustand der gemischten Bestandteile bekannt ist.

2. Verfahren nach Anspruch 1, wobei das Mischersystem (10) einen Tandemmischer umfasst.

3. Verfahren nach einem der Ansprüche 1 oder 2, wobei die eine oder die mehreren elektronischen Bilderfassungsvorrichtungen (18) ausgewählt sind aus der Gruppe bestehend aus Kameras und Infrarotkameras.

4. Verfahren nach einem der Ansprüche 1 bis 3, wobei die eine oder die mehreren elektronischen Bilderfassungsvorrichtungen (18) so angeordnet sind, dass sie Bildaufnahmen der Mischkammer (16) des Mischaggregats (14) durch eine Beschickungsöffnung des Mischaggregats (10) hindurch erfassen können.

5. Verfahren nach einem der Ansprüche 1 bis 4, wobei das Bewerten des Mischzustandes einen oder mehrere Parameter bewertet, die ausgewählt sind aus der Gruppe bestehend aus dem Füllungsgrad der Mischkammer, der Staubentwicklung über der Mischung, der Granularität der Mischung, der Oberflächenstruktur der Mischung und der Homogenität der Mischung.

6. Verfahren nach einem der Ansprüche 1 bis 5, wobei das Bewerten in Verfahrensschritt d) durch Klassieren des Mischzustandes in die Klassen einer Klassifikation erfolgt.

7. Verfahren nach einem der Ansprüche 1 bis 6, wobei ein oder mehrere Reaktionsmaßnahmen ausgelöst werden, wenn die erhaltene Bewertung anzeigt, dass die gemischten Bestandteile einen vorbestimmten Mischzustand aufweisen.

8. Verfahren nach einem der Ansprüche 1 bis 7, wobei das Verfahren in Abhängigkeit der in Verfahrensschritt d) erhaltenen Bewertung gesteuert und/oder geregelt wird.

9. Verfahren zum Herstellen eines Fahrzeugreifens, umfassend die Verfahrensschritte des Verfahrens nach einem der Ansprüche 1 bis 8, sowie die Schritte:
x) Herstellen eines Fahrzeugreifenrohlings, wobei der Fahrzeugreifenrohling die hergestellte Kautschukmischung (12) in zumindest einem Bauteil umfasst, und
y) Vulkanisieren des Fahrzeugreifenrohlings zum Erhalt des Fahrzeugreifens.

10. Mischersystem (10), umfassend:
i) ein Mischaggregat (14) mit einer Mischkammer (16) zum Mischen von Bestandteilen einer herzustellenden Kautschukmischung (12),
ii) eine elektronische Bilderfassungsvorrichtung (18) zum Erfassen von Bildaufnahmen der Mischkammer (16) des Mischaggregats, und
iii) eine elektronische Datenverarbeitungsvorrichtung (20) mit einer Speichereinheit (22),
wobei auf der Speichereinheit (22) ein auf maschinellem Lernen basierendes Bewertungsmodul gespeichert ist,
wobei die elektronische Datenverarbeitungsvorrichtung (20) dazu eingerichtet ist, von der elektronischen Bilderfassungsvorrichtung (18) erfasste Bildaufnahmen des Inneren der Mischkammer (16) des Mischaggregats (14) und den darin gemischten Bestandeile einer herzustellenden Kautschukmischung (12) als Eingabe in das Bewertungsmodul zu geben und den Mischzustand der gemischten Bestandteile mit dem Bewertungsmodul zu bewerten,
wobei das Bewertungsmodul dazu trainiert ist, aus Bildaufnahme des Inneren der Mischkammer (16) des Mischaggregats (14) und den darin gemischten Bestandeile einer herzustellenden Kautschukmischung (12) den Mischzustand der gemischten Bestandteile zu bewerten, wobei das Training mit einem Satz von Trainingsdaten erfolgt, welcher eine Vielzahl von Trainingsbildaufnahme des Inneren einer Mischkammer (16) eines Trainingsmischaggregats und der darin gemischten Bestandeilen einer herzustellenden Trainingskautschukmischung umfasst, für die der Mischzustand der gemischten Bestandteile bekannt ist.
